Europäisches Patentamt

European Patent Office

Office européen des brevets

(11) Veröffentlichungsnummer: **0 255 616**

**A1**

## (12) EUROPÄISCHE PATENTANMELDUNG

(21) Anmeldenummer: **87109838.0**

(22) Anmeldetag: **08.07.87**

(51) Int. Cl.4: **C22B 34/12 , C01G 23/07**

(30) Priorität: **30.07.86 DE 3625735**

(43) Veröffentlichungstag der Anmeldung:
**10.02.88 Patentblatt 88/06**

(84) Benannte Vertragsstaaten:
**DE GB NL**

(71) Anmelder: **HOECHST AKTIENGESELLSCHAFT**
**Postfach 80 03 20**
**D-6230 Frankfurt am Main 80(DE)**

(72) Erfinder: **Jödden, Klaus, Dr.**
**Neustrasse 66**
**D-5042 Erftstadt(DE)**

(54) **Verfahren zur Herstellung von reinem feinteiligem Titandioxid.**

(57) Zur Herstellung von reinem feinteiligem Titandioxid setzt man Eisenoxide aufweisendes titanoxidhaltiges Material in einer Chlorier-Zone mit chlorhaltigen Gasen bei Temperaturen von 800 bis 1300°C unter Bildung von synthetischem Rutil und Eisenchlorid um. Den synthetischen Rutil bringt man ohne Zwischenkühlung in eine nachgeschaltete Chlorierungs-Zone ein und setzt ihn darin mit chlorhaltigen Gasen und einem reduzierenden Stoff bei Temperaturen von 800 bis 1200°C unter Bildung von Titantetrachlorid und Kohlenmonoxid und/oder Kohlendioxid um. Das Titantetrachlorid setzt man schließlich mit Sauerstoff in einer Oxidations-Zone bei 900 bis 1400°C zu Titandioxid und einem chlorhaltigen Gas um, wobei man das chlorhaltige Gas in die Chlorier-Zone zurückführt.

EP 0 255 616 A1

## Verfahren zur Herstellung von reinem feinteiligem Titandioxid

Die vorliegende Erfindung betrifft ein Verfahren zur Herstellung von reinem feinteiligem Titandioxid aus Eisenoxide aufweisendem titanoxidhaltigem Material, chlorhaltigen Gasen, mindestens einem reduzierenden Stoff und Sauerstoff bei höheren Temperaturen.

Nach der CA-PS 1 198 580 werden Titandioxid-Konzentrate, beispielsweise synthetischer Rutil, dadurch hergestellt, daß man ein Eisenoxide aufweisendes titanoxidhaltiges Material mit einem mindestens 70 Volumen% Chlor enthaltenden Gasgemisch bei Temperaturen von 800 bis 1300°C umsetzt. Dabei wird Eisen-III-chlorid gebildet, welches sich verflüchtigt, während ein im wesentlichen aus Titandioxid bestehender Rückstand verbleibt.

Aus der US-PS 2 184 885 ist ein Verfahren zur Entfernung von Eisen aus einem Eisen-Titan-Erz bekannt, bei welchem eine innige Mischung des Erzes mit 1 bis 12 Gewichts% Kohlenstoff bei Temperaturen über 500°C chloriert wird, wobei der Hauptteil des Eisens und merkliche Méngen Titan als Chloride verdampfen. Der verbleibende Rückstand besteht im wesentlichen aus Titandioxid mit nur geringem Eisengehalt.

Schließlich können Titandioxid-Pigmente dadurch hergestellt werden, daß man gereinigten vorerhitzten Titantetrachloriddampft bei erhöhter Temperatur mit Sauerstoff oder sauerstoffhaltigen Gasen umsetzt, wobei das Titantetrachlorid durch Chlorieren von natürlichem Rutil bei Temperaturen von 800 bis 1200°C in reduzierender Atmosphäre erhältlich ist (vergl. WINNACKER-KÜCHLER: "Chemische Technologie", 4. Auflage, Band 3, Anorganische Technologie II, 1983, Seiten 369 bis 371).

Es ist Aufgabe der vorliegenden Erfindung, ein Verfahren zur Herstellung von feinteiligem Titandioxid aus Eisenoxide aufweisendem titanoxidhaltigem Material anzugeben, bei welchem praktisch keine Nebenprodukte anfallen und bei welchem der Energieaufwand minimiert ist. Das wird erfindungsgemäß dadurch erreicht, daß man in einer Chlorier-Zone das Eisenoxide aufweisende titanoxidhaltige Material mit chlorhaltigen Gasen bei Temperaturen von 800 bis 1300°C unter Bildung von synthetischem Rutil und Eisenchlorid umsetzt; daß man den synthetischen Rutil ohne Zwischenkühlung in eine nachgeschaltete Chlorierungs-Zone einbringt und darin mit chlorhaltigen Gasen und dem reduzierenden Stoff bei Temperaturen von 800 bis 1200°C unter Bildung von Titantetrachlorid und Kohlenmonoxid und/oder Kohlendioxid umsetzt; daß man das Titantetrachlorid mit Sauerstoff in einer Oxidations-Zone bei 900 bis 1400°C zu Titandioxid und einem chlorhaltigen Gas umsetzt und daß man das chlorhaltige Gas in die Chlorier-Zone zurückführt.

Das Verfahren gemäß der Erfindung kann weiterhin wahlweise auch noch dadurch ausgestaltet sein, daß

a) man das Eisenchlorid in einer Oxygenierungs-Zone mit Sauerstoff bei Temperaturen von 550 bis 800°C zu Eisenoxid und einem aus Chlor und Sauerstoff bestehenden Gasgemisch umsetzt;

b) man das aus Chlor und Sauerstoff bestehende Gasgemisch in die Chlorierungszone einführt;

c) man das chlorhaltige Gas von Kohlendioxid befreit, bevor man es in die Chlorier-Zone zurückführt;

d) man dem Eisenoxide aufweisenden titanoxidhaltigen Material Kohlenstoff zusetzt;

e) in der Chlorierungs-Zone Kohlenstoff als reduzierender Stoff dient;

f) in der Chlorierungs-Zone Kohlenmonoxid als reduzierender Stoff dient.

Beim erfindungsgemäßen Verfahren werden aus einem Eisenoxide aufweisenden titanoxidhaltigen Material, beispielsweise Ilmenit, und chlorhaltigen Gasen reines Titandioxid und Eisenoxid erhalten, wobei das Eisenoxid bei der Eisenherstellung verwendbar ist. Weitere feste Nebenprodukte fallen nicht an.

Beim Erfahren gemäß der Erfindung wird durch die Übergabe des synthetischen Rutils aus der Chlorier-Zone in die Chlorierungs-Zone ohne Zwischenkühlung je kg hergestellten Titantetrachlorids eine berechnete Energieersparnis von 350 KJ erzielt.

Das beim erfindungsgemäßen Verfahren erhaltene reine feinteilige Titandioxid ist insbesondere zur Herstellung von Pigmenten geeignet.

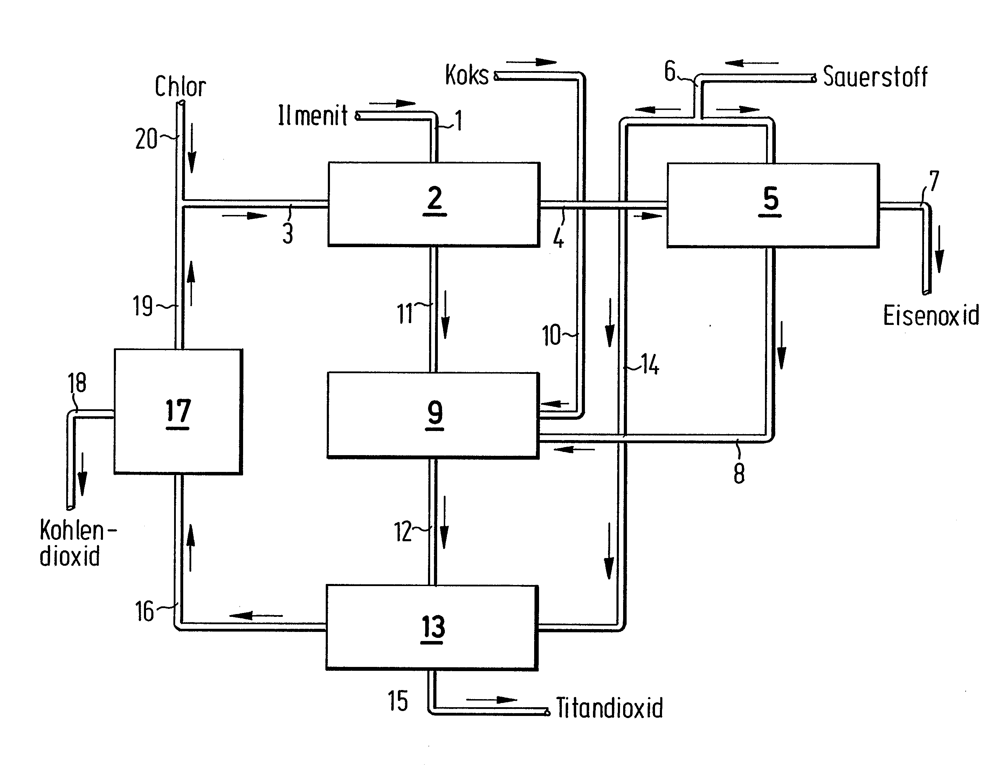

Die beigefügte Zeichnung zeigt ein Blockschema, durch welches das erfindungsgemäße Verfahren erläutert wird.

Ilmenit wird über eine erste Zuführungsleitung 1 in den Chlorier-Reaktor 2 dosiert, in welchem eine Temperatur von 900 bis 1100°C aufrechterhalten wird. Außerdem wird in den Chlorier-Reaktor 2 über eine Leitung 3 Chlorgas eingeleitet. Im Chlorier-Reaktor 2 wird das im Ilmenit enthaltene Eisenoxid unter Freisetzen von Sauerstoff in flüchtiges Eisenchlorid überführt, während synthetischer Rutil zurückbleibt. Das aus Sauerstoff und Eisenchlorid bestehende Gasgemisch wird über die Leitung 4 in den Oxygenierungs-Reaktor 5 eingebracht, in welchem nach Zudosieren von weiterem Sauerstoff über die Leitung 6 im Temperaturbereich von 550 bis 800°C Eisenoxid unter Freisetzen von Chlorgas gebildet wird. Das Eisenoxid wird über die erste Abführungsleitung 7 aus dem Oxygenierungs-Reaktor 5 ausgeschleust, während das aus Sauerstoff und Chlor bestehende Gasgemisch über eine Leitung 8 in den Chlorierungs-Reaktor 9 eingeleitet wird. In den Chlorierungs-Reaktor 9 wird neben Koks über die zweite Zuführungsleitung 10 weiterhin synthetischer Rutil, welcher aus dem Chlorier-Reaktor 2 ausgetragen wurde, ohne Zwischenkühlung über das erste Rohr 11 eingetragen. Im Chlorierungs-Reaktor 9 wird Titantetrachlorid gebildet, wobei der im Chlorstrom enthaltene Sauerstoff durch Bildung von Kohlenmonoxid und/oder Kohlendioxid unter Lieferung von Prozesswärme entfernt wird. Aus dem Chlorierungs-Reaktor 9 strömt ein aus Titantetrachlorid, Kohlenmonoxid und Kohlendioxid bestehendes Gasgemisch über ein zweites Rohr 12 in den Oxidations-Reaktor 13 ein, in welchen über die Leitung 14 zusätzlich Sauerstoff eingeführt wird. Im Oxidations-Reaktor 13 wird reines Titandioxid erhalten, welches über die zweite Abführungsleitung 15 ausgeschleust wird, während aus dem Oxidations-Reaktor 13 ein aus Chlor und Kohlendioxid bestehendes Gasgemisch über eine Leitung 16 einem Verflüssiger 17 zugeführt wird. Im Verflüssiger 17 wird flüssiges Chlor erhalten, während Kohlendioxid über die Leitung 18 abströmt. Das im Verflüssiger 17 erhaltene Chlor wird nach Verdampfen über die Leitung 19 in die Leitung 3 eingespeist. Chlorverluste können über die dritte Zuführungsleitung 20 ausgeglichen werden.

Beispiel 1

In einem senkrecht stehenden Quarzrohr (50 mm ∅) mit eingeschmolzener D1-Fritte wurden 160 g Ilmenit mit einer Schüttdichte von 2400 g/l sowie der Zusammensetzung 53,5 % $TiO_2$, 21,5 % FeO, 20,9 % $Fe_2O_3$, 0,9 % $Al_2O_3$, 0,5 % $SiO_2$, 0,01 % CaO und 0,13 % $V_2O_5$ unter Aufwirbelung mit Stickstoff auf 1010°C erhitzt. Unter Aufrechterhaltung dieser Temperatur wurde dann als Wirbelgas Chlor mit einer Strömungsgeschwindigkeit von 4,0 bis 4,5 cm/s (bezogen auf Normalbedingungen und auf das leere Quarzrohr) durchgeleitet. Das sich sofort bildende gasförmige Eisen-III-chlorid wurde in nachgeschalteten Abscheidegefäßen niedergeschlagen. Die Chlorierung wurde 30 Minuten durchgeführt. Anschließend wurde dem Chlorstrom Kohlenmonoxid (20 Vol%) zugemischt, wodurch sich die Strömungsgeschwindigkeit auf 5,0 bis 5,6 cm/s erhöhte. Das sich bildende Titantetrachlorid wurde in nachgeschalteten Kühlern bei einer Temperatur von 0°C kondensiert. Die Umsetzung wurde nach 45 Minuten beendet und das Quarzrohr auf Raumtemperatur abgekühlt. Während auf der D1-Fritte ein Rückstand von 1,5 g eines grauweißen Pulvers verblieb, betrug die Titantetrachlorid-Ausbeute 192 g, entsprechend 94,5 %, bezogen auf den $TiO_2$-Gehalt des eingesetzten Ilmenits. Zur Gewinnung von feinteiligem Titandioxid wurden 100 ml des gewonnenen Titantetrachlorids in ein Glasgefäß eingefüllt, welches in senkrechter Anordnung mit einem Quarzrohr (∅ 50 mm, Länge 100 cm) verbunden war. Das Quarzrohr wurde mit Hilfe eines elektrischen Ofens auf 1100°C erhitzt. Das Titantetrachlorid wurde mit Hilfe eines Heizpilzes auf 130°C erwärmt und der gebildete Dampf im Sauerstoffstrom (0,8 cm/s, bezogen auf Normalbedingungen) durch das Quarzrohr geleitet. Das gebildete staubförmige weiße Produkt wurde in nachgeschalteten Abscheidern bei Raumtemperatur niedergeschlagen (Korngröße 75 % < 5μm). Nach einer Stunde wurde die Reaktion beendet und die Apparatur mit Stickstoff gespült. Es waren 127,5 g $TiCl_4$ verdampft worden. Die $TiO_2$-Ausbeute betrug, bezogen auf das verdampfte Titantetrachlorid, 88 % und bezogen auf den $TiO_2$-Gehalt des eingesetzten Ilmenits, etwa 83 %.

Beispiel 2

120 g des in Beispiel 1 verwendeten Ilmenits wurden in der in Beispiel 1 angewandten Apparatur unter Aufwirbelung mit Stickstoff auf 980°C erhitzt. Unter Aufrechterhaltung dieser Temperatur wurde als Wirbelgas Chlor mit einer Strömungsgeschwindigkeit von 4,2 cm/s (bezogen auf Normalbedingungen und auf das leere Quarzrohr) durch den Ilmenit hindurchgeleitet. Das sich dabei bildende Eisen-III-chlorid wurde in nachgeschalteten Abscheidegefäßen niedergeschlagen. Die Chlorierung wurde 30 Minuten durchgeführt. Dann wurde das Chlor durch Stickstoff verdrängt und die Temperatur auf 750°C abgesenkt, um bei kurzzeitigem Öffnen der Apparatur dem gebildeten synthetischen Rutil 15 g gemahlenen Petrolkoks (Körnung: 0,1 bis 1 mm) zusetzen zu können. Nun wurde die Mischung von synthetischem Rutil und Petrolkoks mit Hilfe eines aus 85 Vol% Chlor und 15 Vol% Sauerstoff bestehenden Gasgemisches aufgewirbelt, wobei das Gasgemisch eine Strömungsgeschwindigkeit von 4,2 cm/s aufwies. Dabei stieg die Temperatur in kurzer Zeit auf 910°C an. Das sich bildende Titantetrachlorid wurde in nachgeschalteten Kühlern bei 0°C kondensiert. Die Umsetzung wurde nach 45 Minuten beendet und das Quarzrohr auf Raumtemperatur abgekühlt. Während auf der D1-Fritte ein Rückstand von 2,5 g eines grauweißen Pulvers verblieb, betrug die Titantetrachlorid-Ausbeute 146 g, entsprechend 95,8 %, bezogen auf den TiO$_2$-Gehalt des eingesetzten Ilmenits.

Zur Gewinnung von reinem feinteiligem Titandioxid wurde entsprechend Beispiel 1 Verfahren, jedoch mit der Ab änderung, daß nur 80 ml Titantetrachlorid zur Verdampfung eingesetzt wurden. Diese Menge Titantetrachlorid war nach 50 Minuten verdampft. Es wurden 48 g Titandioxid (Korngröße: 95 % < 5 μm) entsprechend 82,3 %, bezogen auf die Menge verdampften Titantetrachlorids, erhalten. Die auf den TiO$_2$-Gehalt des eingesetzten Ilmenits bezogene TiO$_2$-Ausbeute betrug ca. 78,9 %.

**Ansprüche**

1. Verfahren zur Herstellung von reinem feinteiligem Titandioxid aus Eisenoxide aufweisendem titanoxidhaltigem Material, chlorhaltigen Gasen, mindestens einem reduzierenden Stoff und Sauerstoff bei höheren Temperaturen, dadurch <u>gekennzeichnet</u> , daß man in einer Chlorier-Zone das Eisenoxide aufweisende titanoxidhaltige Material mit chlorhaltigen Gasen bei Temperaturen von 800 bis 1300°C unter Bildung von synthetischem Rutil und Eisenchlorid umsetzt; daß man den synthetischen Rutil ohne Zwischenkühlung in eine nachgeschaltete Chlorierungs-Zone einbringt und darin mit chlorhaltigen Gasen und dem reduzierenden Stoff bei Temperaturen von 800 bis 1200°C unter Bildung von Titantetrachlorid und Kohlenmonoxid und/oder Kohlendioxid umsetzt; daß man das Titantetrachlorid mit Sauerstoff in einer Oxidations-Zone bei 900 bis 1400°C zu Titandioxid und einem chlorhaltigen Gas umsetzt und daß man das chlorhaltige Gas in die Chlorier-Zone zurückführt.

2. Verfahren nach Anspruch 1, dadurch <u>gekennzeichnet</u>, daß man das Eisenchlorid in einer Oxygenierungs-Zone mit Sauerstoff bei Temperaturen von 550 bis 800°C zu Eisenoxid und einem aus Chlor und Sauerstoff bestehenden Gasgemisch umsetzt.

3. Verfahren nach Anspruch 1 oder 2, dadurch <u>gekennzeichnet</u>, daß man das aus Chlor und Sauerstoff bestehende Gasgemisch in die Chlorierungszone einführt.

4. Verfahren nach mindestens einem der Ansprüche 1 bis 3, dadurch <u>gekennzeichnet</u> , daß man das chlorhaltige Gas von Kohlendioxid befreit, bevor man es in die Chlorier-Zone zurückführt.

5. Verfahren nach mindestens einem der Ansprüche 1 bis 4, dadurch <u>gekennzeichnet</u>, daß man dem Eisenoxide aufweisenden titanoxidhaltigen Material Kohlenstoff zusetzt.

6. Verfahren nach mindestens einem der Ansprüche 1 bis 5, dadurch <u>gekennzeichnet</u>, daß in der Chlorierungs-Zone Kohlenstoff als reduzierender Stoff dient.

7. Verfahren nach mindestens einem der Ansprüche 1 bis 5, <u>dadurch</u> <u>gekennzeichnet</u>, daß in der Chlorierungs-Zone Kohlenmonoxid als reduzierender Stoff dient.

Chlor

Koks

6 ← Sauerstoff

Ilmenit 1

20

19

18

17

2

3

11

10

4

14

5

7

Eisenoxid

9

8

16

12

13

15 → Titandioxid

Kohlendioxid

0 255 616

Europäisches
Patentamt

**EUROPÄISCHER RECHERCHENBERICHT**

Nummer der Anmeldung

EP 87 10 9838

## EINSCHLÄGIGE DOKUMENTE

| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
|---|---|---|---|---|
| X | US-A-4 389 391 | (W.E. DUNN) *Ansprüche* | 1-7 | C 22 B 34/12 |
| | | --- | | C 01 G 23/07 |
| A | EP-A-0 034 434 | (LAPORTE INDUSTRIES LTD) | | |
| | | --- | | |
| A | EP-A-0 173 132 | (S.C.M. CORP.) | | |
| | | --- | | |
| A | US-A-2 802 721 | (H.S. COOPER) | | |
| | | --- | | |
| A | US-A-3 481 697 | (M.G. FIGUET) | | |
| | | --- | | |
| A | US-A-4 332 615 | (W.D. DUNN) | | |
| | | --- | | |
| A | US-A-4 519 988 | (S.D. FRIDMAN) | | |
| | | --- | | |
| A | US-A-4 540 551 | (J.P. BONSACK) | | |
| | | --- | | |
| A,D | US-A-2 184 885 | (I.E. MUSKAT) | | |
| | | --- | | |
| A,D | CA-A-1 198 580 | (HOECHST AG) | | **RECHERCHIERTE SACHGEBIETE (Int. Cl.4)** |
| | | ----- | | C 22 B |
| | | | | C 01 G |

Der vorliegende Recherchenbericht wurde für alle Patentansprüche erstellt

| Recherchenort | Abschlußdatum der Recherche | Prüfer |
|---|---|---|
| DEN HAAG | 17-11-1987 | JACOBS J.J.E.G. |